# FASCICULE DE BREVET EUROPEEN

(11) **EP 2 561 301 B1**
(45) Date de publication et mention de la délivrance du brevet: **08.01.2020**
(21) Numéro de dépôt: 11721653.1
(22) Date de dépôt: 20.04.2011
(51) Int. Cl.: F28F 9/013, F28D 1/02, F28D 21/00, F28F 13/00, F28D 15/02

(54) **CONDUITE D'EFFLUENT COMPRENANT UNE INSTALLATION POUR EXTRAIRE DE LA CHALEUR**
ABWASSERKANAL MIT EINRICHTUNG ZUM ENTZUG VON WÄRME
EFFLUENT DUCT COMPRISING SYSTEM FOR EXTRACTING HEAT

(30) Priorité: 21.04.2010 FR 1053045
(43) Date de publication de la demande: 27.02.2013
(73) Titulaire: Lyonnaise des Eaux France, 92040 Paris La Defense (FR)
(72) Inventeur: DUONG, Frédéric, F-66370 Pezilla La Riviere (FR)
(74) Mandataire: IPAZ
(86) Numéro de dépôt international: PCT/IB2011/051722
(87) Numéro de publication internationale: WO 2011/132158

(56) Documents cités:
- EP-A2- 1 215 460
- DE-A1- 3 607 207
- DE-A1-102007 006 419
- DE-U1-202004 005 768
- JP-A- 5 164 483
- JP-A- 2007 298 198

## Description

L'invention est relative une conduite d'effluent comprenant une installation pour extraire de la chaleur d'un effluent circulant dans une conduite, en particulier pour extraire de la chaleur d'un collecteur d'eaux usées.

Les collecteurs ou conduites d'évacuation d'eaux usées transportent des eaux sales qui sont tièdes ou tempérées du fait de leur provenance résidentielle ou tertiaire, ou de leur provenance d'activités collectives ou industrielles : abattoirs, infrastructures sportives et de loisirs, piscines, gymnases, etc.

La chaleur sensible de ces eaux représente une source d'énergie qui peut être avantageusement récupérée pour des besoins de chauffage de bâtiments, de production d'eau chaude sanitaire, ou toute autre utilisation thermique, en combinaison avec une pompe à chaleur.

DE 197 19 311 C5 divulgue un échangeur de chaleur permettant de mettre en œuvre un procédé pour extraire de la chaleur d'un effluent. Les éléments de l'échangeur de chaleur baignent dans l'effluent, et peuvent être en forme de plaques métalliques épousant le fond de la conduite ou en forme de profilés métalliques en U qui sont reliés à des canalisations d'arrivée et de départ de fluide caloporteur. Les échangeurs de chaleur sont réalisés essentiellement en pièces métalliques, notamment en acier inoxydable. De tels échangeurs sont relativement coûteux en fabrication et en mise en œuvre. Ces échangeurs de contact ont leur surface placée parallèlement au flux de l'effluent circulant dans la conduite. Il n'y a pas d'obstacle sur le parcours de l'effluent et le risque de colmatage de la surface de l'échangeur est réduit. Toutefois, un dépôt rémanent peut se produire localement.

Ce mode d'échange de chaleur avec un effluent circulant dans une conduite nécessite une longueur développée de contact relativement importante du fait de la surface en contact relativement faible, et de la température relativement basse de l'effluent.

L'échangeur de chaleur constitue un équipement rapporté à l'intérieur des conduites et baignant dans l'effluent ; même si les conduites sont de grandes dimensions, l'installation est compliquée du fait des connexions hydrauliques qui doivent être impérativement étanches et de la forme des pièces de l'échangeur qui doivent s'adapter au profil intérieur des conduites.

DE 36 07 207 propose, dans une conduite d'eaux usées, une installation avec échangeur de chaleur dont une partie est située au-dessus de l'effluent qui circule dans la conduite.

Le document JP 2007 298198 A décrit un dispositif échangeur de chaleur.

L'invention a pour but de fournir une conduite d'effluent comprenant une installation permettant d'extraire efficacement de la chaleur d'un effluent circulant dans une conduite, notamment un collecteur d'eaux usées, dont la mise en place soit simple et économique. Il est souhaitable que l'entretien de l'installation soit facile.

Selon l'invention, une conduite d'effluent comprend installation pour extraire de la chaleur dans une conduite d'effluent, notamment d'un collecteur d'eaux usées, qui comporte sur les zones de la paroi interne de la conduite situées au-dessus de l'effluent, au moins un tube d'échange calorifique exposé à l'atmosphère régnant dans la conduite, parcouru par un fluide caloporteur pour récupérer une partie de la chaleur sensible et de la chaleur latente de condensation de la vapeur d'eau provenant de l'effluent, ladite installation comportant en outre un dispositif de convection forcée pour produire un mouvement d'air qui balaye la surface de l'effluent et augmente le taux d'évaporation de l'effluent.

Plusieurs tubes d'échanges calorifiques peuvent être généralement prévus. Avantageusement, les tubes d'échanges calorifiques sont munis d'ailettes.

Le dispositif de convection forcée est placé en partie supérieure de la conduite, parallèlement aux tubes d'échanges calorifiques. Le dispositif de convection forcée est constitué d'au moins une gaine alimentée en air humide recyclé, ou en air extérieur, par un ventilateur installé à une extrémité de la gaine, en dehors de la conduite d'eau usée.

La gaine du dispositif de convection forcée comporte des buses, ou des fentes, ou des orifices, pour produire des jets orientés vers l'effluent circulant dans la conduite.

Le dispositif de convection forcée peut être asservi à une sonde de température et à un hygrostat placés dans la conduite, de manière à mettre en service le ventilateur uniquement lorsque les conditions de température et d'humidité sont favorables.

En outre, l'installation peut comporter, dans le fond de la conduite, un échangeur de chaleur qui baigne dans l'effluent. L'échangeur de chaleur est avantageusement formé par enrobage de tubes avec un matériau suffisamment conducteur de la chaleur coulé autour des tubes, et propre à durcir, les tubes étant destinés à la circulation d'un fluide caloporteur, l'échange calorifique avec l'effluent de la conduite s'effectuant au travers de l'enrobage moulé, à l'exclusion de toute pièce mécanique rapportée, la surface supérieure du matériau coulé venant directement au contact de l'effluent circulant dans la conduite.

L'échangeur peut être réalisé directement à l'intérieur de la conduite par coulage en place du matériau d'enrobage pour y noyer les tubes, le matériau épousant le profil de la partie inférieure de la conduite.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est une coupe verticale transversale d'une conduite d'eaux usées comportant une installation pour extraire de la chaleur.
Fig. 2, 3 et 4 sont des coupes transversales, à plus petite échelle, de différentes formes de tubes d'échanges calorifiques pour une conduite selon l'invention.
Fig. 5 est un schéma en coupe transversale, à plus grande échelle, d'une nappe de tubes et d'un support en forme de râtelier, en position ouverte.
Fig. 6 est un schéma en coupe transversale, semblable à Fig.5, de la nappe de tubes maintenue dans le râtelier en position fermée.
Fig.7 est une coupe verticale semblable à Fig.1 d'une conduite d'effluent comportant une installation pour extraire de la chaleur avec dispositif de convection forcée, selon l'invention.
Fig. 8 est une coupe longitudinale verticale à plus petite échelle, selon la ligne VIII-VIII de Fig.7.
Fig. 9 est une vue de côté d'un tube avec buses de soufflage pour dispositif de convection forcée.
Fig.10 est une vue de gauche par rapport à Fig.9.
Fig. 11 est une vue de côté d'un tube avec fente de soufflage pour dispositif de convection forcée.
Fig.12 est une vue de gauche par rapport à Fig.11.
Fig. 13 est une vue de côté d'un tube avec orifices de soufflage pour dispositif de convection forcée, et
Fig.14 est une vue de gauche par rapport à Fig.13.

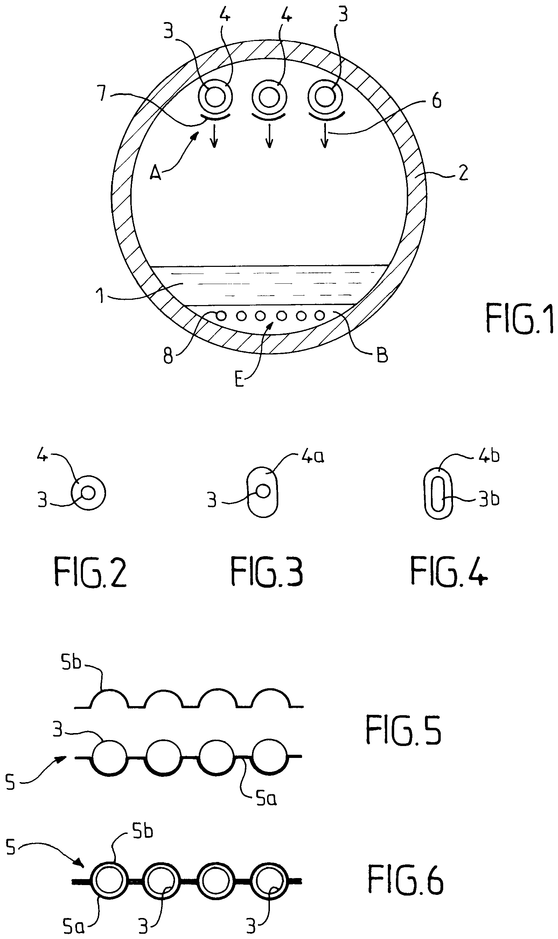

En se reportant à Fig.1 des dessins, on peut voir une installation A pour extraire de la chaleur d'un effluent 1 circulant dans une conduite 2, plus particulièrement un collecteur d'eaux usées. Cette installation comporte des tubes d'échanges calorifiques 3, disposés en nappe, placés à l'intérieur et en partie supérieure de la conduite 2, en dehors de la zone de circulation de l'effluent liquide 1. Les tubes 3 sont fixés sur des zones de la paroi interne de la conduite situées au-dessus de l'effluent et sont exposés à l'atmosphère régnant dans la conduite 2. Les tubes 3 sont parcourus par un fluide caloporteur pour récupérer une partie de la chaleur sensible et de la chaleur latente de condensation de la vapeur d'eau provenant de l'effluent.

Les tubes 3 sont orientés parallèlement à la direction longitudinale de la conduite, et sont reliés en parallèle ou en série pour former un circuit de fluide comportant généralement une pompe à chaleur.

Les tubes 3 peuvent être lisses extérieurement, ou comporter des ailettes rapportées pour augmenter la surface d'échange. Les ailettes peuvent être spiralées, longitudinales, transversales, notamment dans un plan orthogonal à l'axe du tube, ou annelées. Selon Fig.1 et 2, les tubes 3 sont de section circulaire, et comportent des ailettes 4 en forme de couronnes circulaires. Selon Fig.3, le tube 3 est de section circulaire, avec ailettes oblongues 4a. Selon Fig.4, le tube 3b est de section oblongue, avec ailettes oblongues 4b.

Les tubes 3 peuvent être fixés au préalable dans un râtelier entretoise 5, comprenant deux demi-coquilles 5a, 5b visibles sur Fig.5, comportant des logements semi-circulaires régulièrement espacés. Les demi-coquilles 5a, 5b peuvent être assemblées, notamment par encliquetage, comme illustré sur Fig.6 pour maintenir l'écartement entre les tubes 3.

Les tubes 3 peuvent être métalliques, ou en matière synthétique ou plastique. Ils peuvent être rigides, semi-rigides ou souples. Avantageusement les tubes sont propres à être enroulés sur une bobine de sorte que l'on peut mettre en place des longueurs importantes, notamment de plusieurs dizaines de mètres, d'un seul tenant, sans raccords.

La fixation des tubes 3 sur la paroi interne de la conduite 2 peut être réalisée par des colliers, ou des clips à fixation rapide. Le raccordement des tubes de chaque nappe, en série ou en parallèle, peut être assuré par des manchons à compression ou autres raccords rapides qui auront également pour fonction d'assurer la libre dilatation entre chaque nappe.

La section des tubes 3 peut être ronde, aplatie ou ovoïde selon le mode de fabrication et les matériaux utilisés.

Du fait de la condensation intense de la vapeur d'eau contenue dans l'atmosphère, ou ciel, de la conduite 2, l'eau condensée au niveau des surfaces d'échange des tubes 3 va ruisseler directement dans la conduite 1 et retomber dans l'effluent comme schématisé par des flèches 6.

Avantageusement, on prévoit des gouttières 7 situées sous les tubes 3 pour recueillir cette eau condensée et la diriger vers une zone de retour dans l'effluent. En complément des tubes 3 situés à l'extérieur de l'effluent, on peut prévoir un échangeur de chaleur E situé en partie inférieure de la conduite 2 pour baigner dans l'effluent. Cet échangeur E comporte des tubes 8 dans lesquels circule également un fluide caloporteur pour extraire de la chaleur de l'effluent 1. L'échangeur E peut être réalisé en place dans le fond de la conduite 2, en coulant un matériau B relativement conducteur thermiquement, propre à durcir, autour des tubes 8, par exemple un ciment chargé en adjuvants favorisant la conductivité thermique, ou une résine synthétique.

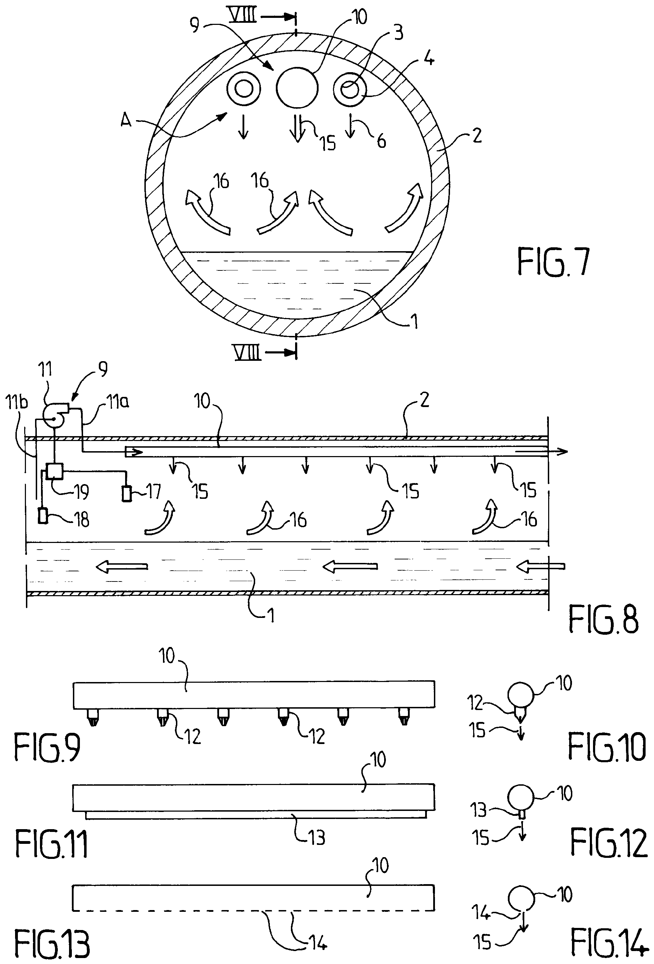

En se reportant aux Fig. 7 et 8, on peut voir une conduite d'effluent comprenant une installation A pour extraire de la chaleur selon l'invention qui comporte un dispositif de convection forcée 9 pour favoriser l'évaporation de l'eau de l'effluent 1. Le dispositif 9 comporte au moins une gaine 10. Chaque gaine peut être constituée d'un tube, spiralé ou soudé, notamment en matériau plastique, ou en aluminium ou en acier galvanisé.

Le dispositif 9 comporte en outre un ventilateur 11 (Fig. 8) installé à l'extérieur de la conduite 2. Le refoulement du ventilateur 11 est relié à une extrémité d'entrée de la gaine 10 par une tubulure de raccordement 11a qui traverse la paroi de la conduite 2, de l'extérieur vers l'intérieur. L'aspiration du ventilateur 11 est reliée par une tubulure 11b, qui traverse également la paroi, à l'intérieur de la conduite 2. En variante, le ventilateur 11 pourrait aspirer directement de l'air extérieur à la canalisation 2.

La gaine 10 est ainsi alimentée en air humide recyclé provenant de l'atmosphère de la canalisation 2, ou en air extérieur.

Le dispositif de convection forcée 9 comporte des buses 12 (Fig.9,10), ou une fente 13 (Fig.11,12), ou des orifices 14 (Fig.13,14) pour produire des jets d'air orientés vers l'effluent 1 circulant dans la conduite. De préférence, la gaine 10 est installée en partie supérieure de la conduite 2 et les jets d'air sont dirigés vers le bas comme schématisé par les flèches 15. Le mouvement d'air ainsi produit dans la conduite 2 assure un balayage de la surface de l'effluent comme schématisé par des flèches 16 et augmente le taux d'évaporation de l'effluent.

Les jets d'air produits par les buses 12 ou les fentes 13 ou les orifices 14 ont une forme conique, s'épanouissant en direction de l'effluent.

Afin de limiter la section de la gaine 10 de distribution d'air et d'assurer un équilibrage du débit tout au long de celle-ci, la pression d'air dans la gaine sera de préférence supérieure à 500 daPA.

Le dispositif de convection forcée 9 est avantageusement asservi à une sonde de température 17 et à un hygrostat 18 placés dans la conduite. En particulier, la sortie de la sonde 17 et celle de l'hygrostat 18 sont reliées à un boîtier de commande 19 du ventilateur 11 de sorte que la mise en service de la ventilation mécanique, par mise en marche du ventilateur 11, ne se produira que lorsque les conditions de température et d'humidité dans la canalisation 2 seront favorables.

Dans le cas d'une grande longueur de gaine 10, celle-ci serait subdivisée en tronçons, par exemple d'une longueur d'environ 50 m, et plusieurs ventilateurs seraient mis en place, notamment un ventilateur 11 pour chaque tronçon de 50 m.

Une conduite d'effluent comprenant une installation A selon l'invention, avec tubes d'échanges calorifiques 3 rapportés à l'intérieur de la conduite 2, au-dessus de l'effluent 1, présente de nombreux avantages.

Elle s'adapte à tous les profils de conduite, ovoïdes, curvilignes et rectangulaires. Les tubes 3 utilisés pour l'installation sont des tubes courants, peu coûteux. L'installation n'exige pas la fabrication de pièces spéciales mécaniques et chaudronnées. Les composants peuvent être introduits dans la conduite 2, sans moyens de manutention, en raison de leur faible poids.

La continuité de l'échangeur constitué par les tubes 3 sur des longueurs importantes de plusieurs dizaines de mètres, sans raccordement hydraulique, réduit les risques de fuite. L'encombrement à l'intérieur des conduites est faible et aucun obstacle n'est créé sur le trajet de l'effluent.

Le montage de l'installation est relativement facile et rapide. Une réparation sur site nécessite peu de moyens de manutention et d'outillage et peut s'effectuer dans de brefs délais.

Le raccordement des nappes de tubes peut s'effectuer par joints à compression standard et, en cas de rupture accidentelle, une réparation rapide peut avoir lieu par manchons et plastrons.

Les tubes 3 composant l'installation présentent une faible inertie thermique, et ne sont pas soumis au risque d'abrasion dû à l'effluent, puisque placés à l'extérieur de cet effluent.

L'invention peut s'appliquer à la récupération de la chaleur des fluides chargés et/ou corrosifs, abrasifs, notamment dans les réseaux d'assainissement urbain, ainsi que dans toutes utilités résidentielles, tertiaires, industrielles qui évacuent des effluents chauds : piscines, écoles, universités, bâtiments administratifs, industries alimentaires, chimiques, pétrochimiques..

## Revendications

1. Conduite d'effluent comprenant une installation pour extraire de la chaleur, notamment d'un collecteur d'eaux usées, l'installation comportant sur les zones de la paroi interne de la conduite situées au-dessus de l'effluent, au moins un tube d'échange calorifique (3, 3b) exposé à l'atmosphère régnant dans la conduite, parcouru par un fluide caloporteur pour récupérer une partie de la chaleur sensible et de la chaleur latente de condensation de la vapeur d'eau provenant de l'effluent, ladite installation comportant en outre un dispositif de convection forcée (9) pour produire un mouvement d'air qui balaye la surface de l'effluent (1), et pour augmenter le taux d'évaporation de l'effluent, le dispositif de convection forcée (9) étant placé en partie supérieure de la conduite (2) parallèlement aux tubes d'échanges calorifiques (3), le dispositif de convection forcée (9) étant constitué d'au moins une gaine (10) alimentée en air humide recyclé, ou en air extérieur, par un ventilateur (11), **caractérisée en ce que** ledit ventilateur est installé à une extrémité de la gaine, en dehors de la conduite (2) d'effluent, la gaine (10) du dispositif de convection forcée comportant des buses (12), ou des fentes (13), ou des orifices (14), pour produire des jets orientés vers l'effluent (1) circulant dans la conduite.

2. Conduite d'effluent selon la revendication 1, **caractérisée en ce que** le ou les tubes d'échanges calorifiques (3,3b) sont munis d'ailettes (4,4a,4b).

3. Conduite d'effluent selon la revendication 1 ou 2, **caractérisée en ce que** le dispositif de convection forcée (9) est asservi à une sonde de température (17) et à un hygrostat (18) placés dans la conduite (2), de manière à mettre en service le ventilateur (11) uniquement lorsque les conditions de température et d'humidité sont favorables.

4. Conduite d'effluent selon l'une quelconque des revendications précédentes, **caractérisée en ce que** l'installation comporte, dans le fond de la conduite (2), un échangeur de chaleur (E) qui baigne dans l'effluent (1).

5. Conduite d'effluent selon la revendication 4, **caractérisée en ce que** l'échangeur de chaleur (E) est formé par enrobage de tubes (8) avec un matériau (B) suffisamment conducteur de la chaleur coulé autour des tubes, et propre à durcir, les tubes étant destinés à la circulation d'un fluide caloporteur, l'échange calorifique avec l'effluent de la conduite s'effectuant au travers de l'enrobage moulé, à l'exclusion de toute pièce mécanique rapportée, la surface supérieure du matériau coulé venant directement au contact de l'effluent circulant dans la conduite.

6. Conduite d'effluent selon la revendication 4 ou 5, **caractérisé en ce que** l'échangeur (E) est réalisé directement à l'intérieur de la conduite (2) par coulage en place du matériau d'enrobage (B) pour y noyer les tubes, le matériau épousant le profil de la partie inférieure de la conduite.

## Patentansprüche

1. Abwasserleitung mit einer Einrichtung zum Abführen von Wärme, insbesondere von einem Abwassersammelrohr, wobei die Einrichtung in den über dem Abwasser befindlichen Bereichen der Innenwand der Leitung mindestens ein der in der Leitung herrschenden Atmosphäre ausgesetztes Wärmetauschrohr (3, 3b) aufweist, das von einem Wärmeübertragungsfluid durchströmt ist, um einen Teil der fühlbaren Wärme und der latenten Wärme der Kondensation des aus dem Abwasser kommenden Wasserdampfs rückzugewinnen, wobei die Einrichtung ferner eine Zwangskonvektionsvorrichtung (9) zum Bewirken einer Luftbewegung, welche die Oberfläche des Abwassers (1) überstreicht, und zum Erhöhen der Verdunstungsrate des Abwassers aufweist, wobei die Zwangskonvektionsvorrichtung (9) im oberen Teil der Leitung (2) parallel zu den Wärmetauschrohren (3) angeordnet ist, wobei die Zwangskonvektionsvorrichtung (9) durch mindestens einer durch ein Gebläse (11) mit recycelter feuchter Luft oder Außenluft gespeisten Hülse (10) gebildet ist, **dadurch gekennzeichnet, dass** das Gebläse an einem Ende der Hülse außerhalb der Abwasserleitung (2) angebracht ist, wobei die Hülse (10) der Zwangskonvektionsvorrichtung (9) Düsen (12) oder Schlitze (13) oder Öffnungen (14) aufweist, um in Richtung des in der Leitung zirkulierenden Abwassers (1) gerichtete Strahlen zu erzeugen.

2. Abwasserleitung nach Anspruch 1, **dadurch gekennzeichnet, dass** das oder die Wärmetauschrohre (3, 3b) mit Rippen (4, 4a, 4b) versehen sind.

3. Abwasserleitung nach Anspruch 1 oder 2, **dadurch gekennzeichnet, dass** die Zwangskonvektionsvorrichtung (9) mit einer Temperatursonde (17) und einem Hygrostat (18), die in der Leitung (2) angeordnet sind, derart gekoppelt ist, dass sie das Gebläse (11) nur in Betrieb setzen, wenn die Temperaturbedingungen und die Feuchtigkeit günstig sind.

4. Abwasserleitung nach einem der vorhergehenden Ansprüche, **dadurch gekennzeichnet, dass** die Einrichtung am Boden der Leitung (2) einen Wärmetauscher (E) aufweist, der in das Abwasser (1) eingetaucht ist.

5. Abwasserleitung nach Anspruch 4, **dadurch gekennzeichnet, dass** der Wärmetauscher (E) durch Umhüllen von Rohren (8) mit einem ausreichend wärmeleitfähigen Material (B) gebildet ist, das um die Rohre gegossen ist und in der Lage ist, auszuhärten, wobei die Rohre der Zirkulation eines Wärmeübertragungsfluids dienen, wobei der Wärmetausch mit der Leitung unter Ausschluss jedes angebauten mechanischen Teils über die gegossene Umhüllung erfolgt, wobei die Oberfläche des gegossenen Materials in direktem Kontakt mit dem in der Leitung zirkulierenden Abwasser gelangt.

6. Abwasserleitung nach Anspruch 4 oder 5, **dadurch gekennzeichnet, dass** der Tauscher (E) unmittelbar im Inneren der Leitung (2) durch vor Ort erfolgendes Gießen von Umhüllungsmaterial (B) ausgebildet ist, um die Rohre in diesem zu versenken, wobei das Material sich an das Profil des unteren Bereichs der Leitung anpasst.

## Claims

1. Effluent duct (2) comprising an installation for extracting heat, notably from a main sewer, said installation comprising, on the areas of the internal wall of the duct situated above the effluent, at least one heat-exchange tube (3, 3b) exposed to the atmosphere prevailing in the duct, through which a heat-transfer fluid travels to recover a portion of the noticeable heat and of the latent heat from condensation of the water vapor originating from the effluent, said installation comprising further a forced-convection device (9) for producing a movement of air which sweeps over the surface of the effluent (1) and to increase the evaporation rate of the effluent,
the forced-convection device (9) being placed in the top portion of the duct (2), parallel to the heat-exchange tubes (3)
the forced-convection device (9) consisting of at least one pipe (10) supplied with recycled humid air, or with outside air, by a fan (11) **characterized in that** said fan is installed at one end of the pipe, outside the effluent duct (2).
the pipe (10) of the forced-convection device comprising nozzles (12) or slots (13) or orifices (14) to produce jets oriented toward the effluent (1) flowing in the duct.

2. Effluent duct as claimed in claim 1, **characterized in that** the heat-exchange tube or tubes (3, 3b) are furnished with fins (4, 4a, 4b).

3. Effluent duct as claimed in claim 1 or 2, **characterized in that** the forced-convection device (9) is slaved to a temperature probe (17) and to a hygrostat (18) placed in the duct (2) so as to start the fan (11) only when the temperature and humidity conditions are favorable.

4. Effluent duct as claimed in any one of the preceding claims, **characterized in that** the installation comprises, in the bottom of the duct (2), a heat exchanger (E) which is immersed in the effluent (1).

5. Effluent duct as claimed in claim 4, **characterized in that** the heat exchanger (E) is formed by coating of tubes (8) with a sufficiently heat-conducting material (B) poured around the tubes, and capable of hardening, the tubes being designed for the circulation of a heat-transfer fluid, the heat exchange with the effluent of the duct taking place through the molded coating, to the exclusion of any fitted mechanical part, the top surface of the poured material coming into direct contact with the effluent flowing in the duct.

6. The installation as claimed in claim 4 or 5, **characterized in that** the exchanger (E) is produced directly inside the duct (2) by in-situ pouring of the coating material (B) in order to embed the tubes therein, the material closely following the profile of the bottom portion of the duct.
